# EUROPEAN PATENT SPECIFICATION

(11) **EP 1 361 199 B1**
(45) Date of publication and mention of the grant of the patent: **09.01.2008**
(21) Application number: 03009192.0
(22) Date of filing: 22.04.2003
(51) Int. Cl.: C03C 3/066, C03C 8/24

(54) **Lead-free low-melting glass**
Bleifreies niedrigschmelzendes Glas
Verre sans plomb à faible point de fusion

(30) Priority: 28.01.2003 JP 2003018830; 24.04.2002 JP 2002122770
(43) Date of publication of application: 12.11.2003
(73) Proprietor: CENTRAL GLASS COMPANY, LIMITED, Ube-shi, Yamaguchi 755-0001 (JP)
(72) Inventor: Hayakawa, Naoya, Central Glass Company, Limited, Matsusaka-shi, Mie 515-0001 (JP); Shimooka, Taishin, Central Glass Company, Limited, Matsusaka-shi, Mie 515-0001 (JP)
(74) Representative: Manitz, Finsterwald & Partner GbR

(56) References cited:
- FR-A- 2 348 897
- SU-A- 547 401
- SU-A- 557 062
- SU-A- 775 061
- SU-A- 923 976
- SU-A- 947 102
- SU-A- 1 169 951
- SU-A- 1 252 310
- SU-A- 1 477 706
- US-A- 5 051 381
- US-A- 5 629 247
- US-A- 6 105 394
- PATENT ABSTRACTS OF JAPAN vol. 015, no. 328 (C-0860), 21 August 1991 (1991-08-21) -& JP 03 126639 A (NIPPON ELECTRIC GLASS CO LTD), 29 May 1991 (1991-05-29)
- PATENT ABSTRACTS OF JAPAN vol. 010, no. 128 (C-345), 13 May 1986 (1986-05-13) -& JP 60 255643 A (HITACHI SEISAKUSHO KK), 17 December 1985 (1985-12-17)

## Description

### BACKGROUND OF THE INVENTION

The present invention relates to a lead-free, low-melting glass for covering a substrate, particularly for covering a transparent electrode pattern or bus electrode pattern disposed on a plasma display panel (PDP) substrate. This glass serves as an electric insulating film of a PDP substrate.

It is general to use a transparent glass substrate as a substrate for electronic devices. Examples of such glass substrate are soda-lime-silica glasses and similar glasses (high strain-point glasses) and alumino-lime-borosilicate glasses that are low in alkali components or almost free therefrom. Their thermal expansion coefficients are from about 65 × 10⁻⁷/°C to about 100 × 10⁻⁷/°C within a range of 30-300°C. In case that a transparent glass substrate has thereon a film having a thermal expansion coefficient substantially different from that of the glass substrate, it may be possible to have defects such as exfoliation of the film and warping of the glass substrate. Furthermore, the above glass substrate has a high softening point of from about 720 to about 840°C. Thus, it is general to have a baking temperature exceeding 630°C, and thereby it may be possible to have a problem of deformation and thermal shrinkage of the substrate.

Hitherto, lead-containing glass has been used as a low-melting glass for covering a substrate. Lead is an important component for making the glass have a low melting point. However, there is a recent trend to avoid the use of lead due to its adverse effect on human and environment.

Japanese Patent Laid-open Publication JP-A-8-26770 discloses a sealing composition for plasma display panel, having a thermal expansion coefficient (of room temperature to 300°C) from 65×10⁻⁷/°C to 85×10⁻⁷/°C.

JP-A-9-278483 discloses a bismuth-based glass composition comprising 20-80 wt% of Bi₂O₃, 5-35 wt% of B₂O₃, 0-35 wt% of BaO, and 0-30 wt% of SrO, wherein the total of BaO and SrO is from 5wt% to 40wt%.

JP-A-2000-128574 discloses a bismuth-based glass composition comprising 30-50 mol% of Bi₂O₃, 10-40 wt% of B₂O₃, and 1-10 wt% of the total of BaO and SrO. This glass composition has a thermal expansion coefficient that is higher than 100×10⁻⁷/°C.

JP-A-2002-12445, corresponding to US Patent 6,475,605, discloses a SiO₂-B₂O₃-BaO-ZnO-based low-melting glass.

### SUMMARY OF THE INVENTION

It is therefore an object of the present invention to provide a low-melting glass capable of easily providing a covering film that has a thermal expansion coefficient close to that of the substrate and a low softening point.

It is another object of the present invention to provide a low-melting glass, which is free from a problem of increasing resistance of transparent electrodes and bus electrodes formed on a PDP substrate, upon baking the low-melting glass formed on these electrodes.

According to a first aspect of the present invention, there is provided a lead-free, low-melting glass for covering a substrate. This glass (first glass) comprises 0.1-25 wt% of SiO₂, 1-50 wt% of B₂O₃, 1-45 wt% of ZnO, 20-90 wt% of Bi₂O₃, 0.1-40 wt% of V₂O₅, 0-5 wt% of Nb₂O₅, 0-20 wt% of R₂O where R is Li, Na or K, and 0-20 wt% of RO where R is Mg, Ca, Sr or Ba. The first glass has a thermal expansion coefficient of from 65 × 10⁻⁷/°C to 100 × 10⁻⁷/°C within a range of 30-300°C; and a softening point of not higher than 630°C.

According to a second aspect of the present invention, there is provided a lead-free, low-melting glass for covering a substrate. This glass (second glass) comprises 0.1-10 wt% of SiO₂, 5-25 wt% of B₂O₃, 1-35 wt% of ZnO, 40-90 wt% of Bi₂O₃, 0.1-5 wt% of V₂O₅, 0-5 wt% of Al₂O₃, 0-5 wt% of Nb₂O₅, 0-20 wt% of R₂O where R is Li, Na or K, and 0-20 wt% of RO where R is Mg, Ca, Sr or Ba. The second glass has a thermal expansion coefficient of from 65 × 10⁻⁷/°C to 100 × 10⁻⁷/°C within a range of 30-300°C; and a softening point of not higher than 550°C.

### DESCRIPTION OF THE PREFERRED EMBODIMENTS

Each of the above-mentioned first and second glasses is defined as being substantially free from PbO, with respect to the term "lead-free". In other words, these glasses may contain PbO in an amount of not greater than 0.3wt% as an impurity contained in a glass raw material and/or cullet. With this, it is possible to neglect adverse effects of PbO on human body, environment, insulation characteristics and the like. Hereinafter, each of the first and second glasses may be referred to as "the low-melting glass" for simplification.

The low-melting glass of the present invention is colorless and lead-free and has a suitable thermal expansion coefficient, a low softening point, and no reactivity with electrodes. Therefore, the low-melting glass is very useful for sealing, covering and rib formation in PDP, fluorescent display tube and the like.

The low-melting glass is used in the form of powder when it is used for sealing, covering and rib formation. According to need, the glass in the form of powder can be mixed with a low-expansion ceramic filler, a heat resistant pigment and the like, followed by kneading with an organic oil, thereby preparing a paste.

The substrate, which is to be covered by the low-melting glass, may be a transparent glass substrate, such as a soda-lime-silica glass or a similar glass (high strain point glass) or an alumino-lime-borosilicate glass. The substrate may have a thermal expansion coefficient of from about 65 × 10⁻⁷/°C to about 100 × 10⁻⁷/°C within a range of 30-300°C. The low-melting glass can have a thermal expansion coefficient close to that of the substrate. With this, it becomes possible to prevent exfoliation of the film from the substrate and/or warp of the substrate. The substrate may have a softening point of from about 720 to about 840°C. In contrast with this, the low-melting glass has a softening point of not higher than 630°C (in the case of the first glass) or 550°C (in the case of the second glass). Therefore, when the film is baked, it become possible to prevent softening, deformation and thermal shrinkage of the substrate.

As mentioned above, it is possible to directly cover a substrate with the film of the low-melting glass, for example, in order to alter optical characteristics of the substrate. Furthermore, it is possible to form at least one of various functional films on the film of the low-melting glass. It is possible to prepare a frosted glass for reducing glare of the solar radiation and artificial illumination, by mixing a low-melting glass powder with a silica fine powder, an alumina fine powder and/or the like and by forming a film from the resulting mixture on a glass substrate.

The low-melting glass for covering a substrate is a glass that has a low softening point and softens at a temperature substantially lower than that of the glass substrate.

The first glass may be modified into a lead-free, low-melting glass (third glass) comprising 0.1-25 wt% of SiO₂, 1-40 wt% of B₂O₃, 1-45 wt% of ZnO, 20-90 wt% of Bi₂O₃, 0.1-5 wt% of V₂O₅, 0-5 wt% of Nb₂O₅, 0-20 wt% of R₂O where R is Li, Na or K, and 0-20 wt% of RO where R is Mg, Ca, Sr or Ba. The thirdglass also has a thermal expansion coefficient of from 65 × 10⁻⁷/°C to 100 × 10⁻⁷/°C within a range of 30-300°C; and a softening point of not higher than 630°C.

The description of chemical components of the low-melting glass is as follows. SiO₂ is a glass-forming component that is essential for making a stable glass. The SiO₂ content of the glass is preferably 0.1-25 wt%. If it is less than 0.1 wt%, the glass may become unstable to cause devitrification. If it is greater than 25 wt%, the softening point of the glass may become too high, making formability and workability difficult.

A PDP can be prepared by forming an insulating film to cover an electrode pattern and then by removing a portion of the insulating film with acid to expose a portion of the electrode pattern. If the SiO₂ content of the glass is excessive, the glass may become too high in acid resistance. Thus, it is preferably not greater than 25 wt% in order to smoothly decompose the film with acid. It is optional to replace half or less by weight of SiO₂ with Al₂O₃ to an extent that the Al₂O₃ content of the glass is not greater than 5 wt%. An Al₂O₃ content that is greater than 5wt% may cause devitrification. An Al₂O₃ content exceeding half of the SiO₂ content may make the glass too high in acid resistance. Therefore, it may become difficult to remove a portion of the insulating film.

Of the chemical components of the glass, B₂O₃ is a glass-forming component similar to SiO₂. B₂O₃ makes it easy to melt the glass, suppresses the excessive increase of the thermal expansion coefficient of the glass, and provides the glass with a suitable fluidity upon baking. The B₂O₃ content of the glass is 1-50 wt%, preferably 1-40 wt%. If it is less than 1 wt%, the glass may become unstable. Thus, devitrification tends to occur. If it exceeds 50 wt%, the softening point of the glass may become too high.

ZnO has functions of lowering the softening point of the glass, providing the glass with a suitable fluidity upon melting and adjusting the glass to having a suitable thermal expansion coefficient. The ZnO content of the glass is 1-45 wt%. If it is less than 1 wt%, these functions may become insufficient. If it is greater than 45 wt%, the glass may become unstable. Thus, devitrification tends to occur.

Similar to ZnO, Bi₂O₃ also has functions of lowering the softening point of the glass, providing the glass with a suitable fluidity upon melting and adjusting the glass to having a suitable thermal expansion coefficient. The Bi₂O₃ content of the glass is 20-90 wt%. If it is less than 20 wt%, these functions may become insufficient. If it is greater than 90 wt%, the thermal expansion coefficient may become too high.

V₂O₅ is a component for suppressing coloring of the glass. The V₂O₅ content of the glass is 0.1-40 wt%, preferably 0.1-5 wt%. If it is less than 0.1wt%, the coloring suppression may become insufficient. If it is greater than 40wt%, the glass may be made to have a black color.

The second glass is made possible by its chemical composition to have a thermal expansion coefficient of from 65 × 10⁻⁷/°C to 100 × 10⁻⁷/°C within a range of 30-300°C and a softening point of not higher than 550°C. Thus, the second glass can serve as a low-melting point (having an extremely low softening point) for film formation, rib formation and sealing on a transparent electrode pattern of a display panel substrate such as PDP.

In case that the film of the low-melting glass covers a transparent electrode pattern that is made of a first oxide (e.g., at least one of In₂O₃, SnO₂ and In₂O₃ doped with Sn (ITO)) and disposed on a substrate of a display panel (e.g., PDP), it is preferable that the low-melting glass also contains 0.1-5 wt% of this first oxide so long as the first oxide does not interfere with the glass to have the above-mentioned thermal expansion coefficient and softening point. Similarly, in case that the film covers a bus electrode pattern that is made of a metal (e.g., at least one of Cu and Ag) and disposed on a substrate of a display panel (e.g., PDP), it is preferable that the low-melting glass also contains 0.1-1.5 wt% of an oxide (e.g., at least one of CuO and Ag₂O) of this metal. This oxide is referred to as "second oxide".

Due to the above containment of at least one of the above first and second oxides, it is possible to suppress the increase of resistance of the transparent electrode and the bus electrode after the formation of a low-melting glass layer on a PDP panel glass having such electrodes. If the first oxide content is less than 0.1wt%, it may not be possible to sufficiently suppress the resistance increase. In contrast, if it is greater than 5wt%, the low-melting glass may have devitrification. If the second oxide content is less than 0.1wt%, the advantageous effect of adding the second oxide may not be sufficient. In contrast, if it is greater than 1.5wt%, the low-melting glass may have a color.

Furthermore, due to the above containment of at least one of the above first and second oxides, it becomes possible to effectively suppress both of (1) a first corrosion of the low-melting glass by the transparent electrode pattern and/or the bus electrode pattern and (2) a second corrosion of the transparent electrode pattern and/or the bus electrode pattern by the low-melting glass. In particular, if the low-melting glass contains 0.1-1.5 wt% of CuO, the low-melting glass is provided with an advantageous filter function that makes blue color of PDP clearer. In fact, PDP is generally inferior in blue color emission. Therefore, the containment of a suitable amount of CuO is particularly preferable. If the amount of at least one of the above first and second oxides is too much, the low-melting glass may have inferior thermal characteristics and an undesirable color.

In case of directly covering a substrate with a film of the low-melting glass, the glass may contain additives of Fe₂O₃, Cr₂O₃, CoO, CeO₂, Sb₂O₃ and the like for providing the glass with a certain color, ultraviolet absorption capability, infrared shielding capability and the like, so long as these additives do not interfere with the glass to have the above-mentioned thermal expansion coefficient, softening point and dielectric constant. The total of the above additives is preferably not greater than 1 wt%.

An exemplary process for producing a front substrate of a PDP will be described as follows. This front substrate is made of a clear soda-lime glass or another glass having a chemical composition, thermal characteristics and the like similar to those of clear soda-lime glass. A transparent electrode pattern, for example, made of an ITO-based or SnO₂-based material is formed on a surface of the front substrate by sputtering or chemical vapor deposition (CVD).

Furthermore, a part of the transparent electrode pattern is covered with a bus electrode of Cr-Cu-Cr (Cu may be replaced with Ag or Al). Then, a transparent insulating film made of a low-melting glass according to the invention is formed on the surface of the front substrate in a manner to cover the front substrate, the transparent electrode pattern and the bus electrode pattern. In fact, this insulating film is prepared by mixing a low-melting glass powder, which has been adjusted to having a certain desired particle size, with a paste oil, then by applying the resulting mixture onto the front substrate and the transparent electrode pattern by screen printing or the like, and then by baking the resulting precursory film at about 630°C into an insulating film having a thickness of about 30 µm. This thickness of about 30 µm is considered to be a sufficient thickness to achieve display capability and display stability for a long time by gas discharge. Furthermore, a protective magnesia layer is formed on the insulating film by sputtering or the like, thereby completing the production of a PDP front substrate.

In some cases, there is a necessity to remove a portion of the insulating film by applying an acid for exposing and connecting a portion of the electrode with an outside lead wire. In these cases, the insulating film preferably has a suitable acid solubility.

### EXAMPLES 1-10 & COMPARATIVE EXAMPLES 1-10

In each of these examples, a paste of a low-melting glass powder was prepared as follows. At first, raw materials of a low-melting glass powder were mixed together. The resulting mixture was put into a platinum crucible and then heated in an electric furnace at a temperature of 1,000-1,100°C for 1-2 hr, thereby obtaining a glass composition shown in Tables 1-4. In fact, a fine silica sand powder, boric acid, aluminum oxide, zinc white, barium carbonate, magnesium carbonate, calcium carbonate, strontium carbonate, bismuth oxide, lithium carbonate, sodium carbonate, potassium carbonate, red lead, ortho phosphate, indium oxide, tin oxide, copper oxide, and silver nitrate were respectively used as raw materials of SiO₂, B₂O₃, Al₂O₃, ZnO, BaO, MgO, CaO, SrO, Bi₂O₃, Li₂O, Na₂O, K₂O, PbO, P₂O₅, In₂O₃, SnO, CuO, and Ag₂O of the glass composition. A portion of the obtained glass composition was poured into a mold, and then the resulting glass block was used for the measurement of its thermal characteristics (thermal expansion coefficient and softening point). The rest of the obtained glass composition was formed into flakes by a rapid-cooling, dual-roller, forming machine, and then formed by a crushing machine into a glass powder having an average particle size of 2-4 µm and a maximum particle size of less than 15 µm. The obtained glass powder and a binder (ethyl cellulose) were mixed with a paste oil composed of α-terpineol and butyl carbitolacetate into a paste having a viscosity of about 300±50 poises, which is suitable for screen printing.

Separately, an ITO pattern film was formed by sputtering on a soda-lime glass substrate having a thickness of 2-3 mm and widths of 150 mm. Then, the above-obtained paste was applied to the glass substrate and the ITO pattern film by screen printing using a screen having a mesh opening of #250 in a manner to adjust an insulating film obtained by the following baking to having a thickness of about 30 µm. The resulting precursory film of the paste was baked at a temperature not higher than 630°C for 60 min, thereby forming an insulating film having a thickness of about 30µm.

The glass block of the low-melting glass was subjected to a measurement of thermal expansion coefficient, as follows. At first, the glass block was cut and ground into a test sample. This test sample was set on a thermal expansion tester. Then, the temperature of the test sample was increased at a rate of 5°C per minute in order to measure elongation of the test sample. Based on this, the average thermal expansion coefficient of the test sample within a range of 30-300°C was determined in terms of α × 10⁻⁷/°C. The results are shown in Tables 1-4. For example, the result of Example 1 was 65 × 10⁻⁷/°C, as shown in Table 1. It is preferable that the low-melting glass has a thermal expansion coefficient close to that of its substrate in contact with the low-melting glass. Thus, the thermal expansion coefficient of the low-melting glass is preferably from 65 × 10⁻⁷/°C to 100 × 10⁻⁷/°C.

The glass block of the low-melting glass was formed by heating into a glass beam having a predetermined size. This glass beam was set on a Lyttelton viscometer. Then, the temperature of the glass beam was increased, and its softening point, that is, a temperature at which viscosity coefficient (η) reached 10^{7.6} was measured. The results are shown in Tables 1-4.

The coated glass substrate having the glass substrate (thickness: 3mm; visible light transmittance: 86%) coated with the ITO film and the insulating film was subjected to a transmittance measurement with a spectrophotometer to determine the average transmittance in the visible region. The results are shown in Tables 1-4. It is preferable that the coated glass substrate has a visible light transmittance of 70% or greater.

After the removal of the insulating film from the coated glass substrate, the electric resistance of the ITO film was measured by a four probe method. This ITO film resistance divided by the ITO film resistance measured prior to the insulating film formation thereon was determined as "ITO resistance increase rate". The results are shown in Tables 1-4. It should be noted that the ITO film resistance increases, if the insulating film is formed on the ITO film, due to the mutual corrosion of the ITO film and the insulating film. The ITO resistance increase rate is preferably not greater than 250%.

Separately, an ITO pattern film was formed on a glass substrate having widths of 30 mm. Then, a bus electrode was formed on the glass substrate to cover a part of the ITO pattern film. After that, the above-obtained paste was applied and then baked, thereby forming an insulating film. The resulting sample was observed with a microscope. In this observation, it was judged as "good" when no bubbles (size: 30 µm or greater) were found around the bus electrode, and as "failure" when such bubbles were found therearound.

In Comparative Examples 4 and 10, vitrification did not occur.

**Table 1**

| | Ex.1 | Ex.2 | Ex.3 | Ex.4 | Ex.5 |
|---|---|---|---|---|---|
| Glass Composition (%) | | | | | |
| SiO₂ | 21.5 | 3.5 | 6.2 | 1.0 | 19.6 |
| B₂O₃ | 3.0 | 36.9 | 24.5 | 6.6 | 5.0 |
| ZnO | 32.5 | 35.1 | 43.1 | 3.4 | 34.7 |
| Bi₂O₃ | 42.0 | 22.5 | 24.5 | 86.1 | 40.3 |
| V₂O₅ | 0.2 | 0.5 | 1.5 | 0.2 | 0.1 |
| Al₂O₃ | 0.3 | -- | -- | 0.5 | -- |
| SnO | 0.1 | -- | -- | -- | 0.1 |
| In₂O₃ | 0.2 | 1.5 | 0.1 | 2.0 | -- |
| CuO | 0.2 | 0.5 | 0.1 | -- | 0.2 |
| Ag₂O | -- | -- | -- | 0.2 | -- |
| Thermal Expansion Coefficient (α) | 65 | 79 | 72 | 100 | 66 |
| Softening Point (°C) | 625 | 550 | 591 | 411 | 610 |
| Visible Light Transmittance (%) | 71 | 75 | 73 | 80 | 72 |
| ITO Resistance Increase Rate (%) | 200 | 210 | 200 | 250 | 200 |
| Coloring of Red Brown Color | No | No | No | No | No |
| Stability | Good | Good | Good | Good | Good |

**Table 2**

| | Com. Ex.1 | Com. Ex.2 | Com. Ex.3 | Com. Ex.4 | Com. Ex.5 |
|---|---|---|---|---|---|
| Glass Composition (%) | | | | | |
| SiO₂ | 26.0 | -- | 0.9 | 13.0 | 0.7 |
| B₂O₃ | 10.0 | 43.0 | 4.2 | 15.0 | 0.8 |
| ZnO | 61.0 | 51.0 | 3.6 | 53.0 | -- |
| Bi₂O₃ | 3.0 | 6.0 | 91.3 | 18.0 | 92.5 |
| V₂O₅ | -- | -- | -- | -- | -- |
| In₂O₃ | -- | -- | -- | -- | 5.5 |
| CuO | -- | -- | -- | 2.0 | -- |
| Ag₂O | -- | -- | -- | -- | -- |
| SnO | -- | -- | -- | -- | 0.5 |
| Thermal Expansion Coefficient (α) | 43 | -- | 102 | 51 | -- |
| Softening Point (°C) | 672 | -- | 438 | 640 | -- |
| Visible Light Transmittance (%) | 61 | -- | 72 | 53 | -- |
| ITO Resistance Increase Rate (%) | 260 | -- | 440 | 280 | -- |
| Reaction with Bus Electrode | Good | -- | Failure | Good | -- |
| Coloring of Red Brown Color | Yes | -- | Yes | Yes | -- |
| Stability | Good | -- | Failure | Good | -- |

**Table 3**

| | Ex.6 | Ex.7 | Ex.8 | Ex.9 | Ex.10 |
|---|---|---|---|---|---|
| Glass Composition (%) | | | | | |
| SiO₂ | 2.5 | 9.3 | 3.1 | 3.2 | 0.7 |
| B₂O₃ | 24.3 | 10.5 | 14.2 | 12.2 | 6.2 |
| ZnO | 32.0 | 26.7 | 14.2 | 10.2 | 3.0 |
| Bi₂O₃ | 40.8 | 52.7 | 67.4 | 72.0 | 86.0 |
| V₂O₅ | 0.1 | 0.2 | 0.5 | 0.5 | 1.1 |
| Al₂O₃ | 0.0 | -- | -- | 0.2 | 0.5 |
| SnO | 0.1 | -- | -- | -- | -- |
| In₂O₃ | 0.1 | 0.5 | 0.5 | 1.5 | 2.0 |
| CuO | 0.1 | 0.1 | 0.1 | -- | 0.5 |
| Ag₂O | -- | -- | -- | 0.2 | -- |
| Thermal Expansion Coefficient (α) | 65 | 70 | 79 | 90 | 100 |
| Softening Point (°C) | 550 | 542 | 501 | 456 | 411 |
| Visible Light Transmittance (%) | 71 | 72 | 76 | 79 | 80 |
| ITO Resistance Increase Rate (%) | 180 | 180 | 200 | 220 | 250 |
| Coloring of Red Brown Color | No | No | No | No | No |
| Stability | Good | Good | Good | Good | Good |

**Table 4**

| | Com. Ex.6 | Com. Ex.7 | Com. Ex.8 | Com. Ex.9 | Com. Ex.10 |
|---|---|---|---|---|---|
| Glass Composition (%) | | | | | |
| SiO₂ | 6.1 | 11.0 | 8.0 | 2.0 | 0.5 |
| B₂O₃ | 23.6 | 15.1 | 12.2 | 29.5 | 1.0 |
| ZnO | 32.1 | 32.3 | 38.7 | 16.3 | -- |
| Bi₂O₃ | 38.2 | 41.6 | 41.1 | 52.2 | 92.5 |
| V₂O₅ | -- | -- | -- | -- | -- |
| In₂O₃ | -- | -- | -- | -- | 5.5 |
| CuO | -- | -- | -- | -- | -- |
| Ag₂O | -- | -- | -- | -- | -- |
| SnO | -- | -- | -- | -- | 0.5 |
| Thermal Expansion Coefficient (α) | 60 | 59 | 59 | 65 | -- |
| Softening Point (°C) | 557 | 567 | 556 | 555 | -- |
| Visible Light Transmittance (%) | 70 | 65 | 71 | 72 | -- |
| ITO Resistance Increase Rate (%) | 260 | 230 | 260 | 280 | -- |
| Reaction with Bus Electrode | Failure | Failure | Failure | Failure | -- |
| Coloring of Red Brown Color | Yes | Yes | Yes | Yes | -- |
| Stability | Good | Good | Failure | Good | -- |

## Claims

1. A lead-free, low-melting glass for covering a substrate, said glass comprising:
0.1-25 wt% of SiO₂, 1-50 wt% of B₂O₃, 1-45 wt% of ZnO, 20-90 wt% of Bi₂O₃, 0.1-40 wt% of V₂O₅, 0-5 wt% of Nb₂O₅, 0-20 wt% of R₂O where R is Li, Na or K, and 0-20 wt% of RO where R is Mg, Ca, Sr or Ba; and
having a thermal expansion coefficient of from 65×10⁻⁷/°C to 100x 10⁻⁷/°C within a range of 30-300°C; and
having a softening point of not higher than 630°C.

2. A glass according to claim 1, wherein said glass comprises 1-40 wt% of said B₂O₃ and 0.1-5 wt% of said V₂O₅.

3. A lead-free, low-melting glass for covering a substrate according to claim 1, wherein said glass comprises:
0.1-10 wt% of SiO₂, 5-25 wt% of B₂O₃, 1-35 wt% of ZnO, 40-90 wt% of Bi₂O₃, 0.1-5 wt% of V₂O₅, 0-5 wt% of Al₂O₃, 0-5 wt% of Nb₂O₅, 0-20 wt% of R₂O where R is Li, Na or K, and 0-20 wt% of RO where R is Mg, Ca, Sr or Ba; and
wherein said glass has a softening point of not higher than 550°C.

4. A glass according to one of claims 1-3, which directly covers the substrate or covers an element disposed on the substrate, said element comprising at least one of a conducting material and a semiconductor pattern.

5. A glass according to one of claims 1-3, which covers an element disposed on the substrate that is used for a display panel, said element comprising at least one of a transparent electrode pattern and a bus electrode pattern.

6. A glass according to claim 5, wherein, when said element comprises said transparent electrode pattern made of an oxide, said glass also comprises 0.1-5 wt% of said oxide.

7. A glass according to claim 6, wherein said oxide is at least one selected from the group consisting of In₂O₂, SnO₂, and In₂O₃ doped with Sn (ITO).

8. A glass according to claim 5, wherein, when said element comprises said bus electrode pattern made of a metal, said glass also comprises 0.1-1.5 wt% of an oxide of said metal.

9. A glass according to claim 8, wherein said oxide is at least one selected from the group consisting of CuO and Ag₂O.

10. A glass according to claim 5, wherein, when said element comprises said transparent electrode pattern made of an oxide, and said bus electrode pattern made of a metal, said glass also comprises 0.1-5 wt% of said oxide and 0.1-1.5 wt% of an oxide of said metal.

11. A laminate comprising:
(a) a substrate; and
(b) a film covering said substrate, said film comprising a lead-free, low-melting glass according to one of claims 1-3.

## Patentansprüche

1. Bleifreies, niedrig schmelzendes Glas zum Beschichten eines Substrates, wobei das Glas enthält:
0,1 - 25 Gew.-% SiO₂, 1 - 50 Gew.% B₂O₃, 1 - 45 Gew.-% ZnO, 20 - 90 Gew.-% Bi₂O₃, 0,1 - 40 Gew.-% V₂O₅, 0 - 5 Gew.-% Nb₂O₅, 0-20 Gew.-% R₂O, worin R Li, Na oder K ist, sowie 0 - 20 Gew.-% RO, worin R Mg, Ca, Sr oder Ba ist, wobei
das Glas einen Wärmeausdehnungskoeffizienten zwischen 65 x 10⁻⁷/°C und 100 x 10-⁷/°C innerhalb eines Bereiches von 30 bis 300 °C aufweist und
das Glas einen Erweichungspunkt von nicht höher als 630 °C aufweist.

2. Glas nach Anspruch 1, wobei das Glas 1-40 Gew.-% B₂O₃ sowie 0,1 - 5 Gew.-% V₂O₅ enthält.

3. Bleifreies, niedrig schmelzendes Glas zum Beschichten eines Substrates nach Anspruch 1, wobei das Glas enthält:
0,1 - 10 Gew.% SiO₂, 5 - 25 Gew.-% B₂O₃, 1 - 35 Gew.-% ZnO, 40 - 90 Gew.-% Bi₂O₃, 0,1 - 5 Gew.-% V₂O₅, 0 - 5 Gew.-% Al₂O₃, 0 - 5 Gew.-% Nb₂O₅, 0 - 20 Gew.-% R₂O, worin R Li, Na oder K ist, sowie 0 - 20 Gew.-% RO, worin R Mg, Ca, Sr oder Ba ist, wobei
das Glas einen Erweichungspunkt von nicht höher als 550 °C aufweist.

4. Glas nach einem der Ansprüche 1 bis 3, welches das Substrat direkt beschichtet oder ein auf dem Substrat angeordnetes Bauteil beschichtet, wobei das Bauteil wenigstens eines eines leitenden Materials und eines Halbleitermusters umfasst.

5. Glas nach einem der Ansprüche 1 bis 3, welches ein auf dem Substrat angeordnetes Bauteil beschichtet, welches für ein Anzeigefeld eingesetzt wird, wobei das Bauteil wenigstens eines eines transparenten Elektrodenmusters und eines Buselektrodenmusters umfasst.

6. Glas nach Anspruch 5, wobei das Glas, wenn das Bauteil das transparente Elektrodenmuster hergestellt aus einem Oxid umfasst, auch 0,1-5 Gew.-% des Oxids enthält.

7. Glas nach Anspruch 6, wobei das Oxid wenigstens eines ist, welches aus der Gruppe ausgewählt ist, welche aus In₂O₃, SnO₂ und In₂O₃ dotiert mit Sn (ITO) besteht.

8. Glas nach Anspruch 5, wobei das Glas, wenn das Bauteil das Buselektrodenmuster hergestellt aus einem Metall umfasst, auch 0,1 - 1,5 Gew.-% eines Oxid des Metalls enthält.

9. Glas nach Anspruch 8, wobei das Oxid wengistens eines ist, welches aus der Gruppe ausgewählt ist, welche aus CuO und Ag₂O besteht.

10. Glas nach Anspruch 5, wobei das Glas, wenn das Bauteil das transparente Elektrodenmuster hergestellt aus einem Oxid und das Buselektrodenmuster hergestellt aus einem Metall umfasst, auch 0,1-5 Gew.-% des Oxids und 0,1 - 1,5 Gew.-% eines Oxids des Metalls enthält.

11. Laminat umfassend:
(a) ein Substrat und
(b) einen das Substrat beschichtenden Film, wobei der Film ein bleifreies, niedrig schmelzendes Glas nach einem der Ansprüche 1 bis 3 enthält.

## Revendications

1. Verre sans plomb, à bas point de fusion, destiné à couvrir un substrat, ledit verre comprenant :
0,1 à 25 % en poids de SiO₂, 1 à 50 % en poids de B₂O₃, 1 à 45 % en poids de ZnO, 20 à 90 % en poids de Bi₂O₃, 0,1 à 40 % en poids de V₂O₅, 0 à 5 % en poids de Nb₂O₅, 0 à 20 % en poids de R₂O dans lequel R représente Li, Na ou K, et 0 à 20 % en poids de RO dans lequel R représente Mg, Ca, Sr ou Ba ; et
ayant un coefficient de dilatation thermique de 65 x 10⁻⁷/°C à 100 x 10⁻⁷/°C dans l'intervalle de 30 à 300°C ; et
ayant un point de ramollissement non supérieur à 630°C.

2. Verre suivant la revendication 1, ledit verre comprenant 1 à 40 % en poids dudit B₂O₃ et 0,1 à 5 % en poids dudit V₂O₅.

3. Verre sans plomb, à bas point de fusion, destiné à couvrir un substrat suivant la revendication 1, ledit verre comprenant :
0,1 à 10 % en poids de SiO₂, 5 à 25 % en poids de B₂O₃, 1 à 35 % en poids de ZnO, 40 à 90 % en poids de Bi₂O₃, 0,1 à 5 % en poids de V₂O₅, 0 à 5 % en poids de Al₂O₃, 0 à 5 % en poids de Nb₂O₅, 0 à 20 % en poids de R₂O dans lequel R représente Li, Na ou K, et 0 à 20 % en poids de RO dans lequel R représente Mg, Ca, Sr ou Ba ; et
ledit verre ayant un point de ramollissement non supérieur à 550°C.

4. Verre suivant l'une des revendications 1 à 3, qui couvre directement le substrat ou couvre un élément placé sur le substrat, ledit élément comprenant au moins l'un d'une matière conductrice et d'un motif semi-conducteur.

5. Verre suivant l'une des revendications 1 à 3, qui couvre un élément placé sur le substrat qui est utilisé pour un panneau d'affichage, ledit élément comprenant au moins l'un d'un motif d'électrode transparent et d'un motif d'électrode de bus.

6. Verre suivant la revendication 5, dans lequel, lorsque ledit élément comprend ledit motif d'électrode transparent formé d'un oxyde, ledit verre comprend également 0,1 à 5 % en poids dudit oxyde.

7. Verre suivant la revendication 6, dans lequel ledit oxyde est au moins un oxyde choisi dans le groupe consistant en In₂O₃, SnO₂ et In₂O₃ dopé au Sn (ITO).

8. Verre suivant la revendication 5, dans lequel, lorsque ledit élément comprend ledit motif d'électrode de bus constitué d'un métal, ledit verre comprend également 0,1 à 1,5 % en poids d'un oxyde dudit métal.

9. Verre suivant la revendication 8, dans lequel ledit oxyde est au moins un oxyde choisi dans le groupe consistant en CuO et Ag₂O.

10. Verre suivant la revendication 5, dans lequel, lorsque ledit élément comprend ledit motif d'électrode transparent constitué d'un oxyde et ledit motif d'électrode de bus constitué d'un métal, ledit verre comprend également 0,1 à 5 % en poids dudit oxyde et 0,1 à 1,5 % en poids d'un oxyde dudit métal.

11. Stratifié comprenant :
(a) un substrat ; et
(b) un film couvrant ledit substrat, ledit film comprenant un verre sans plomb à bas point de fusion suivant l'une des revendications 1 à 3.
